Europäisches Patentamt

European Patent Office

Office européen des brevets

(19)

(11) **EP 1 069 523 A2**

(12) # DEMANDE DE BREVET EUROPEEN

(43) Date de publication:
**17.01.2001 Bulletin 2001/03**

(51) Int Cl.$^7$: **G06K 9/72**

(21) Numéro de dépôt: **00401493.2**

(22) Date de dépôt: **26.05.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **13.07.1999 FR 9909073**

(71) Demandeur: **Analyse d'Image et Intelligence Artificelle**
**75014 Paris (FR)**

(72) Inventeurs:
• **Simon, Jean-Claude**
  **75007 Paris (FR)**
• **Gorsky, Nicolai**
  **195256 Saint Petersbourg (RU)**

(74) Mandataire: **Cabinet Hirsch**
  **34, Rue de Bassano**
  **75008 Paris (FR)**

(54) **Procédé de reconnaissance d'un objet par fusion des modalités et notamment de reconnaissance du montant de cheques**

(57) L'invention propose un procédé automatique d'intégration d'au moins deux listes (L1, L2) représentatives de modalités d'expression d'un même objet; chaque liste comprend au moins une valeur possible de l'objet et un score de vraisemblance associé. L'invention propose de calculer une liste résultat par combinaison d'unions, d'intersections et de multiplications de listes.

La forme ou les coefficients de la combinaison peuvent être déterminés par optimisation des résultats de l'intégration sur une base d'objets connus.

EP 1 069 523 A2

## Description

La présente invention concerne le domaine de la reconnaissance automatique d'un objet exprimé sous plusieurs modalités, et notamment du montant des chèques bancaires. La reconnaissance d'un objet est un problème technique qui se pose de façon de plus en plus fréquente, avec l'accroissement du nombre de documents numériques et des interfaces de toutes natures.

Les chèques bancaires, comme un certain nombre d'autres documents manuscrits, comprennent l'inscription d'un même montant, en chiffres et en lettres. Dans le système bancaire français, la mention en lettres fait foi et est qualifiée de "montant légal", tandis que la mention en chiffres est indicative et est qualifiée de "courtesy amount".

S. Knerr et autres, The A2iA intercheque system : courtesy amount and legal amount recognition for French checks, International Journal of Pattern Recognition and Artificial Intelligence, Vol. 11 no. 4 (1997) pp. 505-548 décrit une technique de reconnaissance automatique des chèques manuscrits. Il est proposé dans ce document de reconnaître le montant en chiffres ainsi que le montant en lettres, avec deux chaînes de reconnaissance; en cas de doute sur la reconnaissance du montant en chiffres, les résultats des deux chaînes sont utilisés pour finalement prendre une décision relative au montant du chèque. Chacune des chaînes de reconnaissance fournit un ensemble de montants candidats, affectés chacun d'une probabilité. On détermine l'intersection des ensembles de montant candidats fournis par les deux chaînes de reconnaissance, et on affecte à chaque montant de l'intersection une probabilité égale au produit des probabilités respectives affectées au montant correspondant dans les deux chaînes de reconnaissance. La décision finale s'effectue sur l'intersection, en fonction des probabilités calculées, et en appliquant un ensemble de règles de rejet ou un réseau de neurones pour assurer un rejet des chèques pour lesquels la reconnaissance n'est pas sûre. La méthode décrite dans ce document permet une reconnaissance de 75% des chèques, pour une erreur de l'ordre de un chèque sur dix mille chèques reconnus, dans le cas de l'encaissement.

Luc Julia, Interface homme-machine multimodale pour la conception et l'édition de documents graphiques, Thèse de Doctorat, ENST Paris 1995, propose une analyse des différentes modalités utilisées pour l'édition de documents graphiques - parole, son, langage écrit, geste - et pose le problème de la fusion des modalités associées dans une tâche spécifique. Ce document propose différents critères d'intégration des modalités - proximité temporelle, complémentarité logique ou structurelle, contexte de dialogue et historique d'interaction. Différentes stratégies d'intégration de ces critères sont discutées. Au delà de l'énoncé des critères, cette thèse ne propose pas de méthode précise d'intégration de modalités différentes, et les exemples sont tous relatifs à des modalités rencontrées dans une interface homme-machine dans l'exemple spécifique de l'édition de documents graphiques. Pour ces exemples, seuls les résultats sont présentés, mais pas la méthode d'intégration des modalités.

Il existe par ailleurs de nombreux systèmes de reconnaissance de l'écriture, qu'elle soit manuscrite ou typographique. Un exemple de reconnaissance d'écriture manuscrite est la tablette graphique commercialisée par la société Apple sous la marque Newton. Des systèmes de reconnaissance vocale sont commercialisés sous l'appellation de dictée vocale, comme par exemple le logiciel vendu par la société IBM sous la marque Viavoice. Ces produits ne proposent pas une fusion de modalités, mais simplement une analyse d'une modalité donnée - l'écriture manuscrite, la parole, ou autre.

L'invention a pour objet d'améliorer l'efficacité d'un système de reconnaissance utilisant des modalités différentes d'un même objet. Dans le cas d'un objet constitué d'un nombre, l'invention s'applique à la reconnaissance du nombre à partir de son écriture en lettres et en chiffres. Elle s'applique tout particulièrement à la reconnaissance des montants des chèques bancaires. L'invention s'applique aussi à la reconnaissance d'un mot écrit et prononcé simultanément.

Plus précisément, l'invention propose un procédé automatique d'intégration d'au moins deux listes (L1, L2) représentatives de modalités d'expression d'un même objet, chaque liste comprenant au moins une valeur possible de l'objet et un score de vraisemblance associé, le procédé comprenant le calcul d'une liste par combinaison d'unions, d'intersections et de multiplications de listes.

De préférence, la combinaison a la forme d'une combinaison linéaire de listes (L1, L2) et d'intersection de listes.

Dans un mode de réalisation, la forme de la combinaison est déterminée par optimisation des résultats de l'intégration sur une base d'objets connus.

Dans un autre mode de réalisation, les coefficients de la combinaison linéaire sont déterminés par optimisation de l'intégration sur une base d'objets connus.

Dans un cas comme dans l'autre, l'optimisation peut être une optimisation par le gradient.

Dans un mode de réalisation, les résultats de l'intégration sont évalués à partir des scores de vraisemblances associés dans une pluralité de listes aux vraies valeur d'une pluralité d'objets connus.

Avantageusement, les listes sont sous forme numérique.

L'invention propose aussi d'appliquer ce procédé à la reconnaissance optique du montant d'un chèque à partir de l'écriture en chiffres et en lettres de ce montant. Dans ce cas, le montant du chèque est choisi comme la valeur de la liste calculée présentant le plus fort score de vraisemblance.

L'invention propose encore d'appliquer ce procédé à la reconnaissance d'un mot écrit et prononcé. Dans ce cas, le mot reconnu est choisi comme la valeur de la liste calculée présentant le plus fort score de vraisemblance.

L'invention propose enfin un produit contenant un programme d'ordinateur mettant en oeuvre ce procédé.

D'autres caractéristiques et avantages de l'invention apparaîtront à la lecture de la description détaillée qui suit des modes de réalisation de l'invention, donnés à titre d'exemple uniquement.

L'invention est décrite dans la suite dans une application à la reconnaissance d'un mot écrit sur une tablette graphique, et prononcé. Elle s'applique plus généralement à la reconnaissance de modalités différentes d'un même objet, pour laquelle elle propose une stratégie de fusion. Elle s'applique aussi à la reconnaissance d'un texte écrit et prononcé. Le texte peut être écrit sur une tablette et subir une reconnaissance graphique; le texte peut aussi être préalablement reconnu. Elle s'applique encore à la reconnaissance du montant d'un chèque, écrit en chiffres et en lettres, ou encore à la reconnaissance du montant d'un chèque reconnu et énoncé.

Soit donc une tablette graphique. En écrivant sur cette tablette graphique à l'aide d'un crayon ou d'un stylo adapté, on obtient une trace bidimensionnelle, fonction du temps appelée signal en ligne S_on. Il est aussi possible de considérer la trace bidimensionnelle sans y associer le temps, auquel cas le signal est dit hors ligne, et noté dans la suite S_off. Dans le cas de mots, ou de caractères, des logiciels spécifiques fournissent des chaînes de reconnaissances des objets tracés. On peut, comme dans l'article de S. Knerr et autres précité pour les montants légaux des chèques, obtenir des ensembles d'objets candidats, affectés de score de vraisemblance. Ces scores sont représentatifs de la probabilité que l'objet tracé soit effectivement l'objet candidat.

A titre d'exemple, on considère un mot isolé, en l'occurrence le mot "chapeau". L'analyse du signal - en ligne ou hors ligne - par une chaîne de reconnaissance adaptée à la reconnaissance de la trace fournit un ensemble ordonné de mots, affectés de scores de vraisemblance; un tel ensemble est aussi appelé liste. On pourrait par exemple avoir

| Mots candidats | Score |
|---|---|
| chapeau | 0.3 |
| shako | 0.1 |
| château | 0.01 |

Un ensemble acoustique - par exemple microphone et micro-ordinateur avec un logiciel approprié - peut fournir un ensemble d'objets candidats pour la modalité d'expression orale d'un objet. On note par exemple S_ac le signal acoustique correspondant. Pour le même mot "chapeau" prononcé, la chaîne de reconnaissance orale peut ainsi fournir une deuxième liste. On pourrait par exemple avoir

| Mots candidats | Score |
|---|---|
| château | 0.7 |
| chapeau | 0.4 |
| charlot | 0.1 |
| chicot | 0.01 |

On comprend de ce qui précède que la chaîne de reconnaissance est un outil d'une nature quelconque, qui pour une modalité d'expression d'un objet, fournit un ensemble d'objets candidats, affectés de scores de vraisemblance. On appelle dans la suite "liste" un tel ensemble ordonné et les scores de vraisemblances associés. Les scores de vraisemblance peuvent être normalisés.

Le problème de l'invention est la fusion ou l'intégration de modalités d'expression d'un objet, c'est-à-dire la détermination à partir de deux listes ou plus de l'objet candidat le plus vraisemblable. L'invention est indépendante de la stratégie d'intégration retenue, autrement dit, de l'association des listes. Les listes peuvent être associées par des critères temporels, par exemple dans le cas d'une tablette graphique et d'un micro, on pourrait associer les mots qui sont prononcés ou écrit simultanément ou successivement. Elles peuvent aussi être associées par des critères spatiaux; dans le cas de la reconnaissance du montant d'un chèque écrit en lettres et en chiffres, les deux listes sont associées sur le fondement de la présence du montant en lettres et en chiffres sur un même chèque. D'autres stratégies d'intégration peuvent permettre d'associer des listes, en fonction des modalités employées. L'invention s'applique donc généralement à la fusion de listes de modalités d'expression d'un objet, obtenues par des chaînes de reconnaissance indépendantes.

On appelle union de deux listes L1 et L2 la liste L1 + L2 comprenant tous les éléments des deux listes L1 et L2, affectés chacun d'un score de vraisemblance qui est égal à la somme, normalisée le cas échéant, des scores de vraisemblances des éléments dans les deux listes; par convention, un objet qui n'apparaît pas dans une liste est affecté d'un score de vraisemblance nul.

Ainsi, dans l'exemple précédent, en notant Li la liste fournie par la tablette graphique, et La la liste fournie par la chaîne vocale, la liste Li + La vaut :

| Mots candidats | Score |
|---|---|
| château | 0.355 = (0.01 +0.7)/2 |
| chapeau | 0.35 = (0.4 +0.3)/2 |
| shako | 0.05 = (0.1)/2 |
| charlot | 0.05 = (0.1)/2 |

(suite)

| Mots candidats | Score |
|---|---|
| chicot | 0.005 = (0.01)/2 |

On appelle intersection de deux listes L1 et L2 la liste L1 x L2 comprenant tous les éléments commun aux deux listes L1 et L2, affectés chacun d'un score de vraisemblance qui est égal au produit des scores de vraisemblances respectifs des éléments dans les deux listes. Avec toujours le même exemple, la liste Li x La vaut :

| Mots candidats | Score |
|---|---|
| chapeau | 0.12 = 0.3*0.4 |
| château | 0.07 = 0.7*0.01 |

On appelle enfin multiplication d'une liste par un réel l'opération qui à une liste et un réel associe une liste présentant les mêmes éléments, et des scores de vraisemblance respectivement égaux au produit des scores de vraisemblances initiaux par le réel. Avec le même exemple, la multiplication 2*Li de la liste Li par 2 vaut

| Mots candidats | Score |
|---|---|
| chapeau | 0.6 = 2*0.3 |
| shako | 0.2 = 2*0.1 |
| château | 0.02 = 2*0.01 |

Pour effectuer l'intégration des modalités, l'invention propose d'utiliser une combinaison C de multiplications, d'unions et d'intersections de listes. La combinaison est optimisée en fonction d'une base de données, qui peut être enrichie et complétée. L'optimisation permet que la combinaison de multiplications, d'unions et d'intersections de listes prennent en compte les reconnaissances déja effectuées et validées.

A titre d'exemple, pour deux listes L1 et L2, on peut utiliser la combinaison suivante :

$$C = a*L1 + b*L2 + (c*L1 \times d*L2) \qquad (1)$$

avec a, b, c et d des réels, a ou b étant non nuls tous les deux.

Dans l'exemple des listes Li et La données ci-dessus, la combinaison avec a = b = 0,1 et c= d = 1, fournit:

| Mots candidats | Score |
|---|---|
| chapeau | 0.19 = (0.04 + 0.03 + 0.12) |
| château | 0.078 = 0.07 + 0.001+0.007) |
| shako | 0.01 |

| Mots candidats | Score |
|---|---|
| chariot | 0.01 |
| chicot | 0.001 |

On constate que le mot chapeau apparaît comme le plus vraisemblable, mais que les autres mots restent proposés, malgré leur vraisemblance plus faible.

La combinaison est ici une fonction de L1 et L2, qui présente un terme en L1, un terme en L2, et un terme croisé L1 x L2; autrement dit, la combinaison présente la forme d'une combinaison linéaire des listes et des intersections de liste, dans l'espace des liste, muni des opérations définies plus haut. On pourrait trouver d'autres formes de combinaisons pour fournir une liste résultat. La combinaison proposée ici présente l'avantage de favoriser l'intersection des deux listes, tout en évitant d'éliminer un candidat qui n'apparaîtrait pas dans une des modalités.

Par rapport à la solution présentée dans l'article de S. Knerr et autres mentionné plus haut, l'invention permet, en utilisant les mêmes chaînes de reconnaissance, d'augmenter d'environ 10% la proportion de chèques reconnus, pour un même taux d'erreur.

Les coefficients a, b, c et d, ou plus généralement la forme de la combinaison utilisée ou les coefficients de la combinaison utilisée sont avantageusement déterminés par optimisation de la reconnaissance sur une base d'objets connus, pour lesquels on détermine les listes fournies par les chaînes de reconnaissance. Connaissant les objets, et les listes, on peut pour une combinaison donnée déterminer les coefficients propres à maximiser l'efficacité de la reconnaissance.

L'efficacité de la reconnaissance peut s'évaluer de la façon suivante. Soit C un classificateur à décision douce. Par opposition à un classificateur à décision unique, la sortie de C consiste en une liste. Cette liste, comme expliqué plus haut, est constituée de couples ( nom j, valeur P(j) ) avec j = 1, 2, ... N ; "nom j" est une classe, ou autrement dit un valeur possible fournie par le classificateur. "valeur P(j)" est le score de vraisemblance de la classe "nom j". Dans l'exemple, la liste est normalisée, et somme de P(j) = 1.

Appliquons C sur un ensemble d'objets m connus, et soit P(vraie-classe(m)) la valeur donnée par C sur m, autrement dit la probabilité affectée à la valeur ou classe exacte de l'objet m connu. En moyennant le logarithme de P(vraie_classe(m)) sur m = 1, 2, .... M objets de tests, dont on connaît la classe réelle, on peut évaluer la qualité Q du classificateur C pour l'ensemble de test :

$$Q = 1 - E[ - \log P(vraie\_classe(m) ] / \log N,$$

E est l'opérateur « valeur moyenne » appliqué sur les M objets de l'ensemble de test. Plus Q est élevé, meilleur est C. Q vaudrait 1 si tout les objets étaient reconnus correctement, avec un score de vraisemblance maximal.

En général les listes sont tronquées, c'est à dire ne présentent pas un cardinal N égal au nombre de résultats ou classes possibles, mais un cardinal K < N. La vraie classe peut ne pas se trouver dans la liste donnée par C. Si c'est le cas, P(vraie_classe) est estimée à P_err(N-K) où P_err, estimé expérimentalement, est la probabilité que la vraie classe n'apparaisse pas dans la liste de longueur K.

Cette solution permet de mesure l'efficacité de la reconnaissance, en partant d'un ensemble d'objets connus : on détermine l'efficacité à partir d'une pluralité d'objets connus, en utilisant les scores de vraisemblances associés dans une pluralité de listes aux vraies valeur des objets. On pourrait aussi évaluer autrement l'efficacité d'une chaîne de reconnaissance ou d'un classificateur à décision douce.

On décrit maintenant, dans l'exemple de la combinaison proposée plus haut, une méthode possible d'optimisation des paramètres. Supposons qu'un classificateur C dépende d'un certain nombre de paramètres, a, b, c et d. Mesurons la qualité Q de C sur un même ensemble de test avec différentes valeurs des paramètres. Il est clair que Q est une fonction de a, b, c et d, pour l'ensemble de test retenu.

$$Q = Q(a, b, c, d)$$

Les valeurs optimales a_opt, b_opt, c_opt et d_opt sont celles qui rendent Q maximum dans l'espace des paramètres a, b, c et d :

$$(a\_opt, b\_opt, c\_opt, d\_opt) = \text{argmax } Q(a, b, c, ...)$$

Le maximum est évalué par exemple au sens de l'efficacité, comme expliqué précédemment. En pratique, ces coefficients optimaux peuvent être obtenus par un processus itératif sur Q, faisant varier les valeurs de a, b, c, d. Expérimentalement nous trouvons que Q a un extremum unique dans l'espace des paramètres, ce qui fait qu'une simple optimisation par le gradient peut être utilisée pour le déterminer.

Bien sûr, d'autres techniques d'optimisation sont possibles. Dans l'exemple de la reconnaissance du montant en chiffres et en lettres des chèques, la base de données peut être constituée d'un ensemble de chèques dont le montant est par ailleurs encodé dans le dispositif numérique utilisé pour l'optimisation. Dans l'exemple de la reconnaissance des mots écrits et prononcés, on peut utiliser comme base de données les modalités d'un ensemble de mots, qui ont été acceptés ou validés par l'utilisateur.

Bien sûr, d'autres techniques d'optimisation sont possibles.

L'invention s'applique aussi à plus de deux modalités; dans l'exemple de trois modalités, on pourrait remplacer la formule (1) proposée plus haut par la formule suivante :

$$C = a*L1 + b*L2 + c*L3 + (d*L1 \text{ x } e*L2) +$$
$$(f*L2 \text{ x } g*L3) + (h*L1 \text{ x } i*L3)$$
$$+ (j*L1 \text{ x } k*L2 \text{ x } 1*L3) \qquad (2)$$

Dans ce cas, la combinaison est une union des listes, et des intersections de listes deux à deux et toutes ensembles. Le nombre de paramètres augmente, mais leur détermination optimale peut rester la même que pour deux listes, par exemple une simple itération de gradient comme expliqué ci-dessus. On peut aussi remplacer les paramètres d et e, par exemple, par un paramètre unique, étant entendu que

$$d*L1 \text{ x } e*L2 = (d.e)*(L1 \text{ x } L2)$$

ce qui simplifie l'optimisation des paramètres. En pratique, l'utilisation de deux paramètres peut s'avérer plus simple.

L'invention est de préférence appliquée dans un ordinateur à l'aide d'un programme, les listes étant alors stockées sous forme numérique; les valeurs possibles sont avantageusement codées. L'invention peut être appliquée dans tout type d'ordinateur, par une programmation adaptée.

Bien entendu, la présente invention n'est pas limitée aux modes de réalisations décrits à titre d'exemple; ainsi, on a proposé dans les exemples précédents le cas de la fusion de deux listes. L'invention s'applique aussi à la fusion d'un nombre de listes plus importants; elle peut donc être utilisée dès que l'on dispose de plusieurs modalités a priori indépendantes de reconnaissance d'un même objet. On pourrait encore appliquer l'invention en combinaison à la méthode de S. Knerr et autres : on procéderait dans ce cas à une reconnaissance selon la méthode de S. Knerr et autre, et on utiliserait comme deuxième modalité l'énonciation du montant du chèque. Cette méthode pourrait être particulièrement avantageuse pour les chèques pour lesquels la méthode connue ne fournit pas des résultats satisfaisants.

## Revendications

**1.** Un procédé automatique d'intégration d'au moins deux listes (L1, L2) représentatives de modalités d'expression d'un même objet, chaque liste comprenant au moins une valeur possible de l'objet et un score de vraisemblance associé, le procédé comprenant le calcul d'une liste par combinaison d'unions, d'intersections et de multiplications de listes.

2. Le procédé selon la revendication 1, caractérisé en ce que la combinaison a la forme d'une combinaison linéaire de listes (L1, L2) et d'intersection de listes.

3. Le procédé selon la revendication 1 ou 2, caractérisé en ce que la forme de la combinaison est déterminée par optimisation des résultats de l'intégration sur une base d'objets connus.

4. Le procédé selon la revendication 2 ou 3, caractérisé en ce que les coefficients de la combinaison linéaire sont déterminés par optimisation de l'intégration sur une base d'objets connus.

5. Le procédé selon la revendication 3 ou 4, caractérisé en ce que l'optimisation est une optimisation par le gradient.

6. Le procédé selon l'une des revendications 1 à 5, caractérisé en ce que les résultats de l'intégration sont évalués à partir des scores de vraisemblances associés dans une pluralité de listes aux vraies valeur d'une pluralité d'objets connus.

7. Le procédé selon l'une des revendications 1 à 6, caractérisé en ce que les listes sont sous forme numérique.

8. Application du procédé selon l'une des revendications 1 à 7, à la reconnaissance optique du montant d'un chèque à partir de l'écriture en chiffres et en lettres de ce montant.

9. Application selon la revendications 8 , caractérisé en ce que le montant du chèque est choisi comme la valeur de la liste calculée présentant le plus fort score de vraisemblance.

10. Application du procédé selon l'une des revendications 1 à 7, à la reconnaissance d'un mot écrit et prononcé.

11. Application selon la revendication 10, caractérisé en ce que le mot reconnu est choisi comme la valeur de la liste calculée présentant le plus fort score de vraisemblance.

12. Un produit contenant un programme d'ordinateur mettant en oeuvre le procédé selon l'une des revendications 1 à 7.